# EUROPEAN PATENT APPLICATION

(11) **EP 2 192 307 A2**
(43) Date of publication of application: **02.06.2010**
(21) Application number: 09252496.6
(22) Date of filing: 28.10.2009
(51) Int. Cl.: F04D 27/02, F04D 29/36, B64C 11/30, B64C 11/38

(54) **Blade pitch control system**

(30) Priority: 01.12.2008 GB 0821783
(71) Applicant: Rolls-Royce plc, 65 Buckingham Gate London SW1E 6AT (GB)
(72) Inventor: Morgan, Antony, Penn Wolverhampton WV4 4LF (GB)
(74) Representative: White, Kevin Andrew

(57) **Abstract**

A method of operating a blade pitch change system (59) of a gas turbine engine and its arrangement, the system comprising a blade (23, 24), an actuator (70), a pressurised fluid system (72) and a control system (60) that regulates pressurised fluid to the actuator (70) to control its position and thereby the blade's pitch; the blade pitch change system (59) operates in a forward thrust mode and a reverse thrust mode, the control system (60) comprises a main pitch control valve (64) and a first reverse blade control valve (66) through which the pressurised fluid passes. The method comprises the steps of a) continuously varying the main control valve (64) to change the blade's pitch within the forward thrust mode at a first rotational rate, b) switching the first reverse blade control valve (66) on to change the blades' pitch between the forward thrust mode and the reverse thrust mode at a second rotational rate that is greater than the first rotational rate.

## Description

The present invention relates to a blade pitch control system for a propeller of a gas turbine engine, preferably an 'open-rotor engine, and a method of operating such a system.

It is well known to provide a variable pitch mechanism and its control system for propellers of aircraft engines. These prior art systems generally employ a hydraulic cylinder controlled by a single control valve. This control valve continuously modulates to vary the cylinder's pressures and flows. The control valve is sized to allow sufficient flow for the actuator to rotate the propeller blades fast enough to limit the over-speed transient that occurs as the blade(s) transition from forward thrust to reverse thrust. The speed of rotation is generally required to be at a rotational rate of >20deg/sec.

However, these prior art systems are disadvantaged because they do not have a redundancy in the event of control valve failure in particular. These prior art systems do not differentiate between normal flight operation and the potentially dangerous thrust reverse modes. The prior art systems have a control valve which allow blade transition rates of >20deg/sec, where normal flight modes only require blade transition rates of up to 3deg/sec. As there is no differentiation in operating modes, in that they all are controlled via a single control valve, the resultant failure transient that may need to accommodated for by the prior art system has to be based on the >20deg/sec.

Furthermore, the control valve size of the prior art is sized to allow the flows consistent with the >20deg/sec rates. The control power necessary to position the valve, particularly against failure cases, is virtually proportionate to the control valve size this leads to less than optimised control electronics' size and weight.

Therefore it is an object of the present invention to provide a control valve system that provides redundancy or failure absorption for a propeller blade variable pitch change mechanism, particularly but not exclusively for an open-rotor aeroengine.

In accordance with the present invention there is provided a blade pitch change system comprising a blade, an actuator, a pressurised fluid system and a control system that regulates pressurised fluid to the actuator to control its position and thereby the blade's pitch; the blade pitch change system operates in a forward thrust mode and a reverse thrust mode, the control system comprises a main pitch control valve and a first reverse blade control valve through which the pressurised fluid passes, the main control valve is continuously variable to change the blade's within the forward thrust mode at a first rotational rate, the first reverse blade control valve is on/off switchable to change the blades' pitch between the forward thrust mode and the reverse thrust mode at a second rotational rate that is greater than the first rotational rate.

Preferably, the main pitch control valve and the first reverse blade control valve are configured in parallel with each other.

Preferably, a second reverse blade control valve is configured in series with the first reverse blade control valve.

Preferably, an EEC is provided to control the valves.

Preferably, the actuator comprises a cylinder and piston, the piston connects to a linkage that rotates the blade, the main pitch control valve and the first reverse blade control valve are both connected to both sides of the piston to control its position and therefore the pitch of the blade.

The main pitch control valve is operable for blade rotation rates of up to 5 deg/sec. Preferably, the main pitch control valve is operable for blade rotation rates between 2 and 3 deg/sec.

Preferably, the reverse blade control valve(s) (66, 68) is operable for blade rotation rates greater that 20 deg/sec.

In another aspect of the present invention there is provided a method of operating a blade pitch change system comprising a blade, an actuator, a pressurised fluid system and a control system that regulates pressurised fluid to the actuator to control its position and thereby the blade's pitch; the blade pitch change system operates in a forward thrust mode and a reverse thrust mode, the control system comprises a main pitch control valve and a first reverse blade control valve through which the pressurised fluid passes, the method comprises the steps of a) continuously varying the main control valve to change the blade's pitch within the forward thrust mode at a first rotational rate and b) switching the first reverse blade control valve on to change the blades' pitch between the forward thrust mode and the reverse thrust mode at a second rotational rate that is greater than the first rotational rate.

Preferably, the main pitch control valve and the first reverse blade control valve are configured in parallel with each other.

Preferably, a second reverse blade control valve is configured in series with the first reverse blade control valve, the method comprising the step of switching the second reverse blade control valve on simultaneously with switching the first reverse blade control valve on.

Preferably, the main pitch control valve is operated to rotate the blade at rates of up to 5 deg/sec.

Preferably, the main pitch control valve is operated to rotate the blade at rates between 2 and 3 deg/sec.

Preferably, the reverse blade control valve(s) is operable for blade rotation rates greater that 20 deg/sec.

The present invention will be more fully described by way of example with reference to the accompanying drawings in which:
Figure 1 is a schematic section of part of an open-rotor aeroengine;
Figure 2 is a detailed schematic of a control system of a prior art propeller blade variable pitch change mechanism;
Figure 3 is a detailed schematic of a control system of a propeller blade variable pitch change mechanism in accordance with the present invention;
Figure 4 shows a typical virtually leak free device (second) valve suitable for use in the mechanism of the present invention.

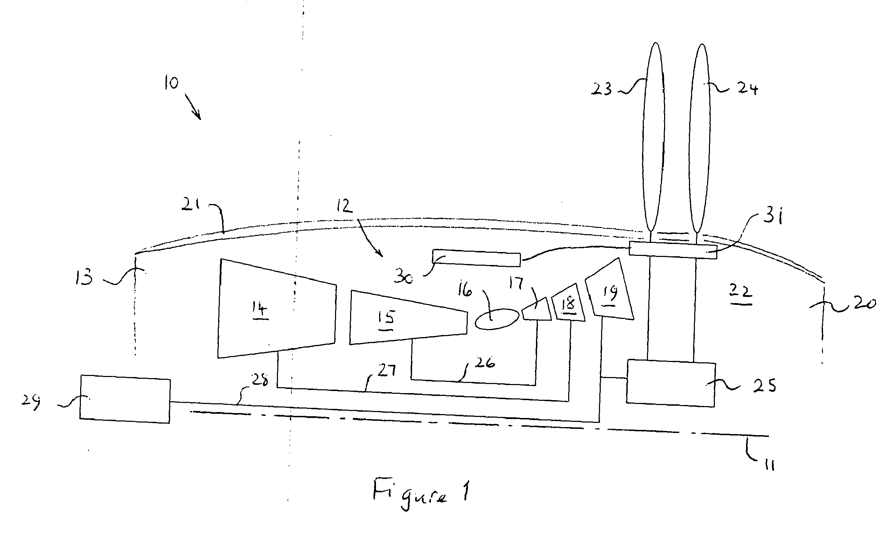

Referring to Figure 1, a twin-spooled, contra-rotating propeller gas turbine engine is generally indicated at 10 and has a principal and rotational axis 11. The engine 10 comprises a core engine 12 having, in axial flow series, an air intake 13, an intermediate pressure compressor 14 (IPC), a high-pressure compressor 15 (HPC), combustion equipment 16, a high-pressure turbine 17 (HPT), an intermediate-pressure turbine 18 (IPT), a low-pressure turbine 19 (LPT) and a core exhaust nozzle 20. A nacelle 21 generally surrounds the core engine 12 and defines the intake 13 and nozzle 20 and a core exhaust duct 22. The engine 10 also comprises two contra-rotating propellers 23, 24 attached to and driven by the low-pressure or free power turbine 19 via a gearbox 25. Alternatively, the free power turbine 19 may comprise contra-rotating blade arrays, as known in the art, and which drive the two contra-rotating propellers 23, 24.

The gas turbine engine 10 works in a conventional manner so that air entering the intake 13 is accelerated and compressed by the IPC 14 and directed into the HPC 15 where further compression takes place. The compressed air exhausted from the HPC 15 is directed into the combustion equipment 16 where it is mixed with fuel and the mixture combusted. The resultant hot combustion products then expand through, and thereby drive the high, low-pressure and free power turbines 17, 18, 19 before being exhausted through the nozzle 20 to provide some propulsive thrust. The high, low-pressure and free power turbines 17, 18, 19 respectively drive the high and intermediate pressure compressors 15, 14 and the propellers 23, 24 by suitable interconnecting HP, IP and LP shafts 26, 27, 28 respectively. Collectively, each compressor, turbine and shaft combination is referred to a spool. The propellers 23, 24 normally provide the majority of the propulsive thrust. A starter/generator 29 is connected to the LP spool and operates in conventional manner. An engine electronic controller 30 is provided to control engine systems such as fuel metering and a blade pitch change system 31.

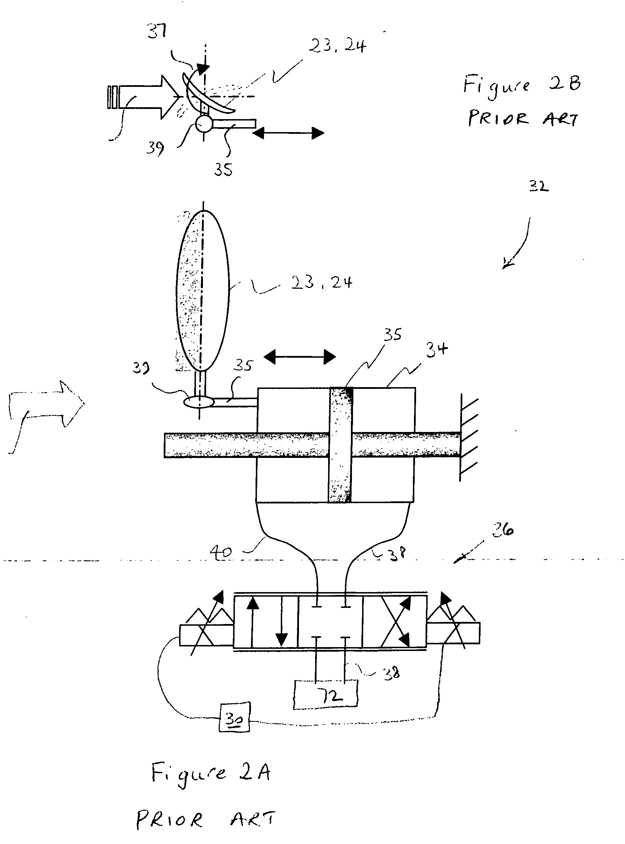

The prior art pitch-change system, shown in Figures 2a and 2b, generally employs a hydraulic cylinder 34 controlled by a single control valve 36. This system controls the flow of pressurised fluid from a source 72 to the cylinder via line 38, 40 that feed opposite sides of the cylinder's piston 35. The electronic controller 30 operates the valve 36 to control the pressurised fluid either side of the piston to control its position and therefore via linkage 39 the pitch of the blades 23, 24 s shown by arrow 37. In figure 2b the blade 23, 24 is shown in solid line in a forward thrust position and in dashed line in a reverse thrust position. The control valve 36 continuously modulates to vary the cylinder's pressures and flows. The control valve is sized to allow sufficient flow for the hydraulic cylinder 34 to rotate the blades fast enough to limit the over-speed transient that occurs as the blade(s) transition from forward thrust to reverse thrust. The speed of rotation is generally required to be at a rotational rate of >20 deg/sec.

This prior art system is disadvantaged however because they do not have a redundancy in the event of control valve failure in particular. There is no differentiation between normal flight operation, requiring a rotational speed of 3 deg/sec, and the thrust reverse modes, requiring a rotational rate of >20 deg/sec. As there is no differentiation in operating modes, in that they all are controlled via a single control valve, the resultant failure transient that may need to accommodated for by the prior art system has to be based on the >20 deg/sec. Furthermore, the control valve size is sized to allow the actuation flows consistent with the >20 deg/sec rates. The control power necessary to position the valve, particularly against failure cases, is virtually proportionate to the control valve size this leads to less than optimised control electronics' size and weight.

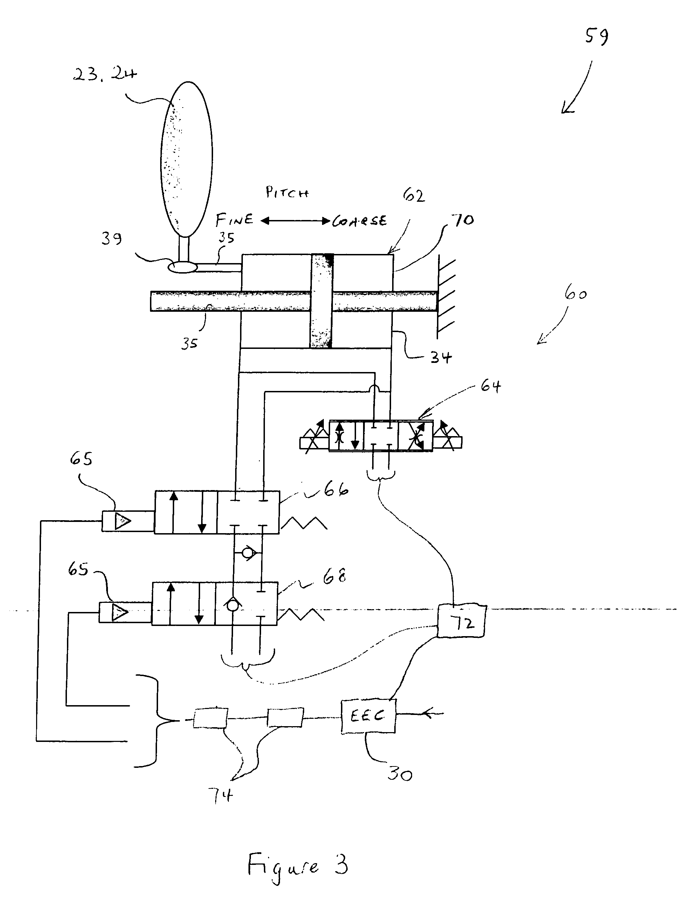

Referring now to Figure 3, which shows blade pitch change system 59 comprising a control system 60 of a propeller blade's variable pitch change mechanism 62 in accordance with the present invention. The control system 60 comprises a continuously variable main control valve 64 sized to cover the normal blade pitch rotational change rates of normal flight modes. As before, the normal (forward thrust) flight modes require blade transition rates of up to 5 deg/sec, and typically between 2 and 3 deg/sec. Connected in parallel to the main control valve 64 are first and second thrust reverser valves 66, 68. A hydraulic pump 72 supplies pressurised fluid to the control valves 64, 66, 68 on demand from an engine electronic controller (EEC) 30. The two thrust reverser valves 66, 68 are operated via solenoids 65 that are themselves controlled by the EEC 30.

The thrust reverser valves 66, 68 are digitally operated, meaning that they have two discrete operational states and are not continuously variable. The thrust reverser valves 66, 68 are signalled by electronic relay logic, held in the EEC 30 rather than the electrically more elaborate and heavy drive electronics needed for continuous valves.

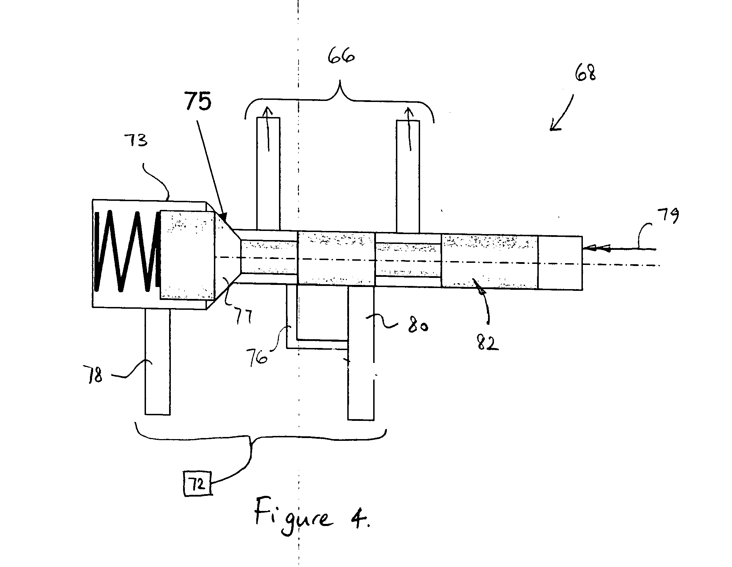

The thrust reverser valves 66, 68 operate in series with each other. Second valve 68, shown in Figure 4, is a virtually leak free device which acts as an isolator of the "thrust reverse" mode. The second valve 68 comprises a conical (or similar) leak free spool 82 and seat valve 75 (or similar) that isolates the pressure by pressure applied mechanical sealing between an internal moveable cone 77 and a housing 73 until being signalled via the command input 79. First valve 66 only receives pressure inflow when the moveable spool 82 of second valve 68 moves to the left as seen in Figure 4. First valve 68 leaves the cylinder 70 under the control of the main control valve 64, until it is energised when it allows the cylinder 70 to move to "fine pitch" blade position at a high rotation rate greater than 20 deg/sec and usually up to 30 deg/sec.

The cylinder 70 (or other actuator) cannot go into the high rate transition to "fine" mode without both valves 66, 68 being correctly signalled. The drive signals to the two valves 66, 68 allows safety "and" gates 74 to be included, also the system can include intermediate status indicators.

## Claims

1. A blade pitch change system (59) comprising a blade (23, 24), an actuator (70), a pressurised fluid system (72) and a control system (60) that regulates pressurised fluid to the actuator (70) to control its position and thereby the blade's pitch; the blade pitch change system (59) operates in a forward thrust mode and a reverse thrust mode,
the control system (60) comprises a main pitch control valve (64) and a first reverse blade control valve (66) through which the pressurised fluid passes,
the main control valve (64) is continuously variable to change the blade's pitch within the forward thrust mode at a first rotational rate,
the first reverse blade control valve (66) is on/off switchable to change the blades' pitch between the forward thrust mode and the reverse thrust mode at a second rotational rate that is greater than the first rotational rate.

2. A blade pitch change system (59) as claimed in claim 1 wherein the main pitch control valve (64) and the first reverse blade control valve (66) are configured in parallel with each other.

3. A blade pitch change system (59) as claimed in any one of claims 1-2 wherein a second reverse blade control valve (68) is configured in series with the first reverse blade control valve (66).

4. A blade pitch change system (59) as claimed in any one of claims 1-3 wherein an EEC (30) is provided to control the valves.

5. A blade pitch change system (59) as claimed in any one of claims 1-4 wherein the actuator (70) comprises a cylinder (34) and piston (35), the piston connects to a linkage (39) that rotates the blade, the main pitch control valve (64) and the first reverse blade control valve (66) are both connected to both sides of the piston to control its position and therefore the pitch of the blade.

6. A blade pitch change system (59) as claimed in any one of claims 1-5 wherein the main pitch control valve (64) is operable for blade rotation rates of up to 5 deg/sec.

7. A blade pitch change system (59) as claimed in any one of claims 1-6 wherein the main pitch control valve (64) is operable for blade rotation rates between 2 and 3 deg/sec.

8. A blade pitch change system (59) as claimed in any one of claims 1-7 wherein the reverse blade control valve(s) (66, 68) is operable for blade rotation rates greater that 20 deg/sec.

9. A method of operating a blade pitch change system (59) comprising a blade (23, 24), an actuator (70), a pressurised fluid system (72) and a control system (60) that regulates pressurised fluid to the actuator (70) to control its position and thereby the blade's pitch; the blade pitch change system (59) operates in a forward thrust mode and a reverse thrust mode, the control system (60) comprises a main pitch control valve (64) and a first reverse blade control valve (66) through which the pressurised fluid passes, the method comprises the steps of
a) continuously varying the main control valve (64) to change the blade's pitch within the forward thrust mode at a first rotational rate,
b) switching the first reverse blade control valve (66) on to change the blades' pitch between the forward thrust mode and the reverse thrust mode at a second rotational rate that is greater than the first rotational rate.

10. A method of operating a blade pitch change system (59) as claimed in claim 9 wherein the main pitch control valve (64) and the first reverse blade control valve .(66) are configured in parallel with each other.

11. A method of operating a blade pitch change system (59) as claimed in any one of claims 9-10 wherein a second reverse blade control valve (68) is configured in series with the first reverse blade control valve (66), the method comprising the step of switching the second reverse blade control valve (68) on simultaneously with switching the first reverse blade control valve (66) on.

12. A method of operating a blade pitch change system (59) as claimed in any one of claims 9-11 wherein the main pitch control valve (64) is operated to rotate the blade at rates of up to 5 deg/sec.

13. A method of operating a blade pitch change system (59) as claimed in any one of claims 9-12 wherein the main pitch control valve (64) is operated to rotate the blade at rates between 2 and 3 deg/sec.

14. A method of operating a blade pitch change system (59) as claimed in any one of claims 1-7 wherein the reverse blade control valve(s) (66, 68) is operable for blade rotation rates greater that 20 deg/sec.
